Europäisches Patentamt

European Patent Office

Office européen des brevets

(11) Veröffentlichungsnummer: **0 624 211 B1**

(12)

# EUROPÄISCHE PATENTSCHRIFT

(45) Veröffentlichungstag der Patentschrift: **02.11.95**

(51) Int. Cl.[6]: **D21C 5/02**

(21) Anmeldenummer: **93903231.4**

(22) Anmeldetag: **25.01.93**

(86) Internationale Anmeldenummer:
**PCT/EP93/00160**

(87) Internationale Veröffentlichungsnummer:
**WO 93/15260 (05.08.93 93/19)**

(54) **VERFAHREN ZUR ENTFERNUNG VON DRUCKFARBEN AUS BEDRUCKTEM ALTPAPIER.**

(30) Priorität: **03.02.92 DE 4203000**

(43) Veröffentlichungstag der Anmeldung:
**17.11.94 Patentblatt 94/46**

(45) Bekanntmachung des Hinweises auf die
Patenterteilung:
**02.11.95 Patentblatt 95/44**

(84) Benannte Vertragsstaaten:
**AT BE CH DE ES FR GB IT LI NL SE**

(56) Entgegenhaltungen:
**WO-A-91/01405**
**WO-A-91/11424**

(73) Patentinhaber: **Henkel Kommanditgesellschaft auf Aktien**

**D-40191 Düsseldorf (DE)**

Patentinhaber: **DAUTE, Peter**
**Kreuzeskirchstrasse 5**
**D-45127 Essen (DE)**

(72) Erfinder: **SCHRECK, Berthold**
**Mauerstrasse 26**
**D-4000 Düsseldorf 30 (DE)**
Erfinder: **HORNFECK, Klaus**
**August Burberg-Strasse 34**
**D-4020 Mettmann (DE)**

## Beschreibung

### Gebiet der Erfindung

Die Erfindung betrifft ein Verfahren zur Entfernung von Druckfarben aus bedrucktem Altpapier in Gegenwart von Alkoxylaten geblasener Öle als Deinking-Chemikalien. Die Erfindung betrifft darüber hinaus die Verwendung dieser speziellen Deinking-Chemikalien zur Entfernung von Druckfarben aus bedrucktem Altpapier.

### Stand der Technik

Zur Herstellung von beispielsweise Zeitungsdruck- und Hygienepapieren werden heute in großen Mengen Altpapiere eingesetzt. Für diese Papiersorten sind Helligkeit und Farbe Qualitätsmerkmale. Um diese zu erreichen, müssen die Druckfarben aus den bedruckten Altpapieren entfernt werden. Üblicherweise geschieht dies mittels sogenannter Deinking-Verfahren. Diese Verfahren werden in technisch üblichen Anlagen zur Altpapier-Aufbereitung durchgeführt, die mit zusätzlichen Einrichtungen zur Abtrennung der abgelösten Druckfarbenteilchen versehen sind. Zwei wichtige Teilschritte sind dabei:

(1) Das Aufschlagen der Altpapiere. Unter Aufschlagen ist dabei der Prozeß der Zerfaserung der Altpapiere zu verstehen. Er kann z.B. in wäßrigem Medium durch Zuführung mechanischer Energie (Rühren) induziert werden. Die Zerfaserung wird begleitet von der Ablösung der Druckfarbenteilchen. Beim Aufschlagen wird eine Papierstoff-Suspension in Form eines grauen Papierbreis erhalten.

(2) Die Entfernung der abgelösten Druckfarbenteilchen aus der Papierstoff-Suspension. Dieser Schritt des Deinking-Verfahrens kann durch Auswaschen oder Flotation erfolgen [vergl. z.B. "Ullmanns Encyclopädie der technischen Chemie", 4. Auflage, Band 17, Seiten 570 - 571 (1979)].

Üblicherweise wird das Deinken von Altpapieren bei alkalischen pH-Werten in Gegenwart von Alkalihydroxiden, Alkalisilikaten, oxidativ wirkenden Bleichmitteln und oberflächenaktiven Substanzen bei Temperaturen zwischen 30 und 50 °C durchgeführt. Als oberflächenaktive Substanzen werden meist anionische und/oder nichtionische Tenside eingesetzt, z.B. Seifen, ethoxylierte Fettalkohole und/oder ethoxylierte Alkylphenole [vergl. z.B. "Wochenblatt für Papierfabrikation", 17, 646 - 649 (1985)].

Die deutsche Patentanmeldung DE-A-34 01 444 betrifft ein Verfahren zum Deinken von Altpapier unter Verwendung einer Verbindung der allgemeinen Formel $RCOO\text{-}(CH_2CH_2O)_m\text{-}(AO)_n\text{-}R'$ in der R eine Alkyl- oder Alkenylgruppe mit 7 bis 21 C-Atomen, R' ein Wasserstoffatom oder eine Alkyl-, Alkenyl- oder Acylgruppe mit 1 bis 18 C-Atomen, AO $C_3H_6O$- oder $C_4H_8O$-Gruppen oder eine Mischung aus $C_2H_4O$-, $C_3H_6O$- und $C_4H_8O$-Gruppen, m eine ganze Zahl von 1 bis 100 und n eine ganze Zahl von 1 bis 100 bedeuten.

Die Verwendung von ethoxylierten Rizinusölen zum Deinken von bedruckten Altpapieren ist aus JP-A-78/52705, referiert in Chem. Abstr. 89, 131445j (1978) und DE-C-21 48 590 bekannt. In dem japanischen Schutzrecht werden Mischungen aus Rizinusöl mit 10 bis 400 % Ethylenoxid und ethoxyliertem Nonylphenol beschrieben, die sich zur Entfernung von Druckfarben aus bedruckten Altpapieren eignen. Das in der deutschen Patentschrift DE-C-21 48 590 geschützte Verfahren betrifft organische Materialien, beispielsweise Papier, die mit Natriumchlorit in Gegenwart von organischen Verbindungen mit wenigstens einer Ethylenoxid- und/oder Propylenoxideinheit gebleicht werden. Als organische Verbindung mit wenigstens einer Alkylenoxideinheit eignet sich u. a. ethoxyliertes Rizinusöl.

### Beschreibung der Erfindung

Bei Verwendung ethoxylierter Rizinusöle zum Entfernen von Druckfarben aus Altpapieren muß jedoch in Kauf genommen werden, daß die auf dem Markt erhältlichen Mengen an Rizinusöl und damit auch an ethoxylierten Rizinusölen starken Schwankungen unterworfen sind. Mißernten in den Hauptanbaugebieten Brasilien und Indien führen in mehr oder weniger großen Abständen zu einer Verknappung des Ausgangsmaterials Rizinusöl. Es besteht daher ein Bedürfnis nach einem Ersatz für ethoxylierte Rizinusöle, die, zur Entfernung von Druckfarben aus Altpapieren eingesetzt, zumindest zu ebenso guten Deinking-ergebnissen führen wie das zu ersetzende Produkt. Vor allem sollte das Austauschprodukt von einer breiteren, weniger krisenanfälligen Rohstoffbasis aus leicht zugänglich sowie ökologisch und toxikologisch unbedenklich sein.

Es wurde nun gefunden, daß sich Alkoxylate geblasener Öle, hergestellt durch Anlagerung von Alkylenoxiden, z. B. Ethylen- und/oder Propylenoxid, an geblasene Öle, als Ersatz für ethoxylierte Rizinusöle zur Entfernung von Druckfarben aus Altpapier in hervorragender Weise eignen. Ferner wurde gefunden, daß mit diesen Verbindungen Druckfarben auch aus Papierkreislaufwässern mit guten Ergebnissen entfernt werden können.

Gegenstand der Erfindung ist daher ein Verfahren zur Entfernung von Druckfarben aus bedrucktem Altpapier in Gegenwart einer Deinking-Chemikalie, wobei bedrucktes Altpapier zu einer Papierstoff-Suspension aufgeschlagen wird und die abgelösten Druckfarbenteilchen in einer weiteren Stufe in an sich bekannter Weise durch Flotation oder Auswaschen entfernt werden, und wobei als Deinking-Chemikalie Alkoxylate geblasener Öle eingesetzt werden.

Unter dem Begriff Deinking-Chemikalie wird dabei im Sinne der Erfindung ein Stoff verstanden, der die Ablösung von Druckfarbenteilchen aus bedrucktem Altpapier bewirkt oder unterstützt bzw. der die spätere Abtrennung der abgelösten Druckfarbenteilchen erleichtert.

Ein weiterer Gegenstand der Erfindung ist die Verwendung von Alkoxylaten geblasener Öle zur Entfernung von Druckfarben aus bedrucktem Altpapier.

Die erfindungsgemäß einzusetzenden Alkoxylate geblasener Öle werden durch Umsetzung von Alkylenoxiden, zum Beispiel Ethylen- oder Propylenoxid, mit geblasenen Ölen in an sich bekannter Weise hergestellt. Unter geblasenen Ölen werden dabei die Umsetzungsprodukte verstanden, die bei der Reaktion trocknender Öle mit Luft oder Sauerstoff erhalten werden. Diese Reaktion wird üblicherweise als Blasen bezeichnet, wobei Hydroperoxide gebildet werden, vergl. "Ullmanns Enzyclopädie der Technischen Chemie", Band 23, 4. Auflage, Weinheim 1983, Seite 447.

Über die Produkte der Luftoxidation natürlicher Fette und Öle gibt es eine reichhaltige Literatur, die insbesondere auch den Verderb von Nahrungsfetten in Anwesenheit von Luft und Licht bei gewöhnlichen Temperturen einschließt. Die Autoxidation von Tran wurde insbesondere von F. J. Elsinger (Versuchsanstalt für Lederindustrie, Wien) systematisch untersucht, vergleiche z. B. "Das Leder", 1978 (29) 73-81, 1981 (32) 189-198 und 1982 (33) 125-131. Elsinger oxidierte mit Luft bei Temperaturen von 60 bis 100 °C über längere Zeit. Bereits in seiner ersten Arbeit wies er auf Peroxide und insbesondere Hydroperoxide als Primärprodukte der Autoxidation von Tran hin, aus denen dann durch Molekülabbau, Molekülveränderung oder Molekülvergrößerung Sekundärprodukte gebildet werden können.

Die beim Blasen gebildeten Hydroperoxide sind relativ stabil. Mit zunehmender Reaktionszeit unterliegen sie jedoch vielfältigen Folgereaktionen, wobei das Kohlenstoffgerüst der Fettsäurebausteine des jeweiligen Öls intakt bleiben oder sich verändern kann. Unter Erhalt der Kohlenstoffkette entstehen insbesondere Dihydroperoxide, isomere Peroxide, Alkohole und Epoxide; bei der Spaltung von Kohlenstoffbindungen können z. B. Aldehyde entstehen. Da im Zuge der Reaktion darüber hinaus C = C-Doppelbindungen gespalten werden, ist die Jodzahl des Blasproduktes geringer, als die Jodzahl des eingesetzten Öles. Darüber hinaus weisen die geblasenen Öle höhere Dichten und Viskositäten als die eingesetzten Öle auf.

Zur Herstellung der erfindungsgemäßen Alkoxylate geblasener Öle werden solche geblasenen Öle verwendet, die bei 60 bis 150 °C und Reaktionszeiten von 1 bis 13 Stunden, vorzugsweise 3 bis 6 Stunden, hergestellt werden. Beispielsweise kann ein beheizbarer Rohrreaktor mit dem zu blasenden Öl beschickt und dieses bei Temperaturen von 60 bis 150 °C mit Sauerstoff bzw. Luft in Kontakt gebracht werden. Dabei kann die Lufteinleitung z. B. durch eine Siebplatte am Boden des Rohrreaktors erfolgen. Die Blaszeiten betragen dabei 1 bis 13 Stunden, vorzugsweise 3 bis 6 Stunden. Die im Verlaufe des Blasvorganges zunehmende Erhöhung der Dichte und der Viskosität kann in einfacher Weise dazu verwendet werden, in Labor oder Betrieb den jeweils gewünschten Blaszustand einzustellen.

Beispiele für geblasene Öle sind geblasenes Fischöl, geblasenes Rüböl und geblasenes Sojaöl. Zahlreiche geblasene Öle sind kommerziell verfügbare Produkte.

Die Alkoxylate geblasener Öle lassen sich in an sich bekannter Weise durch Umsetzung geblasener Öle mit Alkylenoxiden bei erhöhter Temperatur in Gegenwart der üblichen aus dem Stand der Technik bekannten Alkoxylierungskatalysatoren wie Natriummethanolat herstellen.

Der Verfahrensschritt, bei dem die Deinking-Chemikalie innerhalb des gesamten Deinking-Prozesses zudosiert wird, unterliegt an sich keiner besonderen Beschränkung. Aus praktischen Gründen kann es jedoch zweckmäßig sein, die Deinking-Chemikalie entweder direkt beim Aufschlagen im sogenannten "pulper" zuzugeben, oder sie vor dem Auswaschen bzw. der Flotation zuzugeben.

In einer bevorzugten Ausführungsform der vorliegenden Erfindung werden die Alkoxylate geblasener Öle den Papierstoff-Suspensionen vorzugsweise in Mengen von 0,02 bis 2 Gew.-%, vorzugsweise von 0,1 bis 0,8 Gew.-% - jeweils bezogen auf lufttrockenen Papierstoff - zugesetzt. Lufttrockener Papierstoff bedeutet dabei, daß sich im Papierstoff ein Gleichgewichtszustand an innerer Feuchte eingestellt hat. Dieser Gleichgewichtszustand hängt ab von der Temperatur sowie der relativen Luftfeuchtigkeit.

Es ist von besonderem Vorteil, in dem erfindungsgemäßen Verfahren solche Alkoxylate geblasener Öle einzusetzen, bei denen der Gewichtsanteil des Oxyalkylenteils 20 bis 95 %, vorzugsweise 50 bis 80 %, beträgt. Dabei ist es besonders bevorzugt, Ethoxylate, Propoxylate und/oder Butoxylate geblasener Öle einzusetzen; ganz besonders eignen sich Ethoxylate und/oder Propoxylate geblasener Öle.

In vielen Fällen kann das Ausmaß der Entfernung von Druckfarben aus bedruckten Altpapieren gesteigert werden, wenn die erfindungsgemäßen Alkoxylate geblasener Öle in Kombination mit beispielsweise $C_{10-22}$-Fettsäuren bzw. deren Alkali- bzw. Erdalkalisalzen, ethoxylierten $C_{6-22}$-Alkylalkoholen, ethoxylierten Alkylphenolen, kationischen Polymeren, z.B. Polydimethylaminoethylmethacrylat und/oder Copolymeren, beschrieben beispielsweise in DE-A-38 39 479, eingesetzt werden. Ganz besonders eignen sich dabei die genannten Fettsäuren bzw. deren Salze sowie kationische Polymere. Die Gesamtmenge dieser fakultativen Bestandteile liegt zwischen 0,05 und 1 Gew.-%, bezogen auf lufttrockenen Papierstoff.

Bei der Verwendung einer Kombination der erfindungsgemäßen Alkoxylate geblasener Öle mit $C_{10-22}$-Fettsäuren bzw. deren Alkali- bzw. Erdalkalisalzen hat es sich als günstig herausgestellt, die Fettsäuren bzw. deren Salze in einer Menge von 0,2 bis 1,0 Gew.-% - bezogen auf lufttrockenen Papierstoff - einzusetzen. Besonders gut eignen sich dabei solche Kombinationen, bei denen das Gewichtsverhältnis von Fettsäuren bzw. deren Salzen und den Alkoxylaten geblasener Öle etwa 2 : 1 beträgt.

In Gegenwart von Alkoxylaten geblasener Öle lassen sich Druckfarben, beispielsweise Zeitungsrotationsfarben, Buchdruckfarben, Offsetdruckfarben, Illustrationstiefdruckfarben, Flexodruckfarben, Laserdruckfarben und/oder Verpackungstiefdruckfarben aus bedruckten Altpapieren, beispielsweise Zeitungen, Illustrierten, Computerpapieren, Zeitschriften, Broschüren, Formularen, Telefonbüchern und/oder Katalogen entfernen. Die in Gegenwart der erfindungsgemäß zu verwendenden Verbindungen deinkten Altpapiere zeichnen sich durch hohe Weißgrade aus.

Die Druckfarben lassen sich aus Altpapieren beispielsweise nach folgendem Verfahren entfernen: In einem Stofflöser werden bedruckte Altpapiere bei einer Stoffdichte beispielsweise zwischen 0,5 und 5 Gew.-% in wäßriger Lösung, die typischerweise 0 bis 1,5 Gew.-% Wasserstoffperoxid (100 %ig), 0 bis 2,5 Gew.-% Natriumhydroxid (99 gew.-%ig), 0 bis 4,0 Gew.-% Natronwasserglas mit einem Feststoffgehalt von 35 Gew.-%, 0,02 bis 2 Gew.-% der erfindungsgemäßen Alkoxylate geblasener Öle und 0 bis 1 Gew.-% der oben genannten fakultativen Bestandteile - alle Gew.-%-Angaben beziehen sich auf lufttrockenes Altpapier - enthält, bei Temperaturen zwischen 20 und 60 °C zerkleinert. Nach einer Verweilzeit zwischen typischerweise zwischen 60 und 120 Minuten bei Temperaturen zwischen 20 und 60 °C werden die Papierstoff-Suspensionen in weiteres Wasser eingerührt oder mit weiterem Wasser versetzt, so daß 0,6 bis 1,6 gew.-%ige Papierstoff-Suspensionen erhalten werden. Anschließend werden die abgelösten Druckfarbenteilchen in an sich bekannter Weise durch Auswaschen oder durch Flotation aus den Papierstoffsuspensionen ausgeschieden. Vorzugsweise wird in an sich bekannter Weise, beispielsweise in einer Denver-Flotationszelle (Labormaßstab) flotiert.

Sofern wasserbasierte Flexodruckfarben aus Altpapier entfernt werden sollen, empfiehlt es sich, das Verfahren dahingehend zu modifizieren, das Alkoxylates eines geblasenen Öles in Kombination mit einem kationischen Polymer einzusetzen und das Polymer unmittelbar vor der Flotation zuzugeben.

Durch den Einsatz von Alkoxylaten geblasener Öle lassen sich Druckfarben sowohl aus dem Altpapier als auch aus dem Kreislaufwasser entfernen. Die erfindungsgemäß zu verwendenden Verbindungen können aber auch zur separaten Reinigung von Papierkreislaufwässern eingesetzt werden. In diesen Fällen werden nach Zusatz von 2 bis 100 mg von Alkoxylaten geblasener Öle pro Liter Kreislaufwasser die Druckfarbenteilchen beispielsweise durch Filtration oder Flotation ausgeschieden.

Die folgenden Beispiele sollen die Erfindung erläutern und sind nicht einschränkend zu verstehen.

## Beispiele

### 1. Verwendete Substanzen und Materialien

#### 1.1. Geblasene Öle

| | |
|---|---|
| **Geblasenes Fischöl:** | Fa. Böhme Fettchemie |
| **Geblasenes Rüböl:** | Fa. Henry Lamotte (Bremen) |
| **Geblasenes Sojaöl:** | Fa. Akzo Chemicals GmbH |

#### 1.2. Ethoxylate geblasener Öle

Beispiel 1: Ethoxylierung von geblasenem Fischöl

390 g geblasenes Fischöl wurden mit 8 g einer 30%igen Lösung von Kaliumhydroxid in Wasser versetzt und in einem Autoklaven auf 100 °C erhitzt. Bei dieser Temperatur wurden die vorhandenen Methanolspuren durch 5-maliges Evakuieren und Belüften mit Stickstoff als Schutzgas entfernt. Nach Erhöhung der Reaktionstemperatur auf 150 °C wurden insgesamt 610 g Ethylenoxid portionsweise so zudosiert, daß der Druck im Reaktor einen Wert von 5 bar nicht überstieg. Nach Beendigung der Reaktion wurde auf 80-100 °C abgekühlt, zur Entfernung vorhandener Ethylenoxidspuren ca. 15 Minuten evakuiert und mit Milchsäure neutralisiert. Das Rohprodukt war eine braune Flüssigkeit (OH-Zahl = 101).

Beispiel 2: Ethoxylierung von geblasenem Rüböl

130 g geblasenes Rüböl wurden mit 0,6 g einer 50%igen wäßrigen Kaliumhydroxidlösung versetzt und unter den in Beispiel 1 angegebenen Bedingungen bei 160 °C mit 204 g Ethylenoxid umgesetzt. Nach Entfernen der Ethylenoxidspuren im Vakuum und Neutralisation mit Milchsäure erhielt man eine braune Flüssigkeit (OH-Zahl = 70).

Beispiel 3: Ethoxylierung von geblasenem Sojaöl

130 g geblasenes Sojaöl wurden mit 0,6 g einer 50 %igen wäßrigen Kaliumhydroxidlösung versetzt und unter den in Beispiel 1 angegebenen Bedingungen bei 160 °C mit 204 g Ethylenoxid umgesetzt. Nach Entfernen der Ethylenoxidspuren im Vakuum und Neutralisation mit Milchsäure erhielt man eine braune Flüssigkeit (OHZ = 85).

**1.3. Lufttrockenes (bedrucktes) Altpapier**

Tageszeitungen und Illustrierte wurden 144 Stunden bei 60 °C im Trockenschrank gelagert und auf diese Weise künstlich gealtert. Das lufttrockene Altpapier wurde in kleine Teile zerschnetzelt, wobei Tageszeitungen und Illustrierte im Gewichtsverhältnis 1:1 enthalten waren. Der Feuchtigkeitsgehalt der bedruckten Papierschnitzel betrug 5,7 Gew.-%.

**2. Drucktarbenentfernung aus alkalischem Medium**

**2.1. Aufschlagen**

Eine wäßrige Aufschlämmung von 17,5 g lufttrockenem, geschnetzeltem Altpapier mit einer Stoffdichte von 3,5 Gew.-% wurde in einem Rührgefäß vorgelegt. Nachdem nacheinander
a) 2,0 Gew.-% Natronwasserglas mit einem Feststoffgehalt von 35 Gew.-% (37 bis 40 °Bé),
b) 1,0 Gew.-% Natriumhydroxid (99 gew.-%ig),
c) 0,7 Gew.-% Wasserstoffperoxid (100 %ig) und
d) 0,2 Gew.-% der erfindungsgemäßen Alkoxylate geblasener Öle gemäß den Beispielen 1 bis 3
zu dieser Aufschlämmung zugegeben worden waren - alle Gew.-%-Angaben bezogen auf lufttrockenen Papierstoff -, wurden die aufgeschlämmten Papierschnitzel 10 Minuten bei 45 °C mit einer Dissolver-Scheibe (Fa. Pendraulik, Labormischer 34), zerkleinert. Man ließ den so erhaltenen Papierbrei 105 Minuten bei 45 °C stehen.

**2.2. Drucktarben-Flotation (Deinking)**

Der unter 2.1. erhaltene Papierbrei wurde mit Wasser auf 1 Gew.-% Stoffdichte verdünnt. Anschließend wurde 12 Minuten bei 45 °C in einer Denver-Laborflotationszelle bei 1000 Umdrehungen pro Minute flotiert. Nach der Flotation wurde der erhaltene Papierbrei auf einer Filternutsche vom Wasser getrennt und zwischen 2 Filterpapieren auf einer Fototrockenpresse zu einem Blatt geformt und bei 100 °C 90 Minuten getrocknet.
Die Deinking-Ergebnisse sind in Tabelle 1 zusammengefaßt. Die Deinkbarkeitsmaßzahl (DEM) wurde aus den Reflektionsfaktoren $R_{457nm}$ (Weißgrad) der bedruckten (BS) deinkten (DS) und unbedruckten (US) Papierstoffe nach folgender Formel berechnet:

$$DEM\ (\%) = \frac{Wei\ss grad\ (DS) - Wei\ss grad\ (BS)}{Wei\ss grad\ (US) - Wei\ss grad\ (BS)} \times 100$$

(0 % bedeutet keine Druckfarbenentfernung, 100 % bedeutet quantitative Druckfarbenentfernung). Das Kreislaufwasser war in allen Fällen frei von Druckfarben.

Tabelle 1

| Druckfarben-Flotation | | | |
|---|---|---|---|
| eingesetzte Verbindung, hergestellt nach Beispiel | $R_{457}$[1] (US) | $R_{457}$[1] (BS) | $R_{457}$[1] (DS) | DEM (%) |
| 1 | 62,6 | 43,1 | 54,9 | 61 |
| 2 | 62,6 | 41,7 | 52,5 | 52 |
| 3 | 62,6 | 41,7 | 52,6 | 52 |

[1] $R_{457}$ bedeutet $R_{457nm}$

**Patentansprüche**

1. Verfahren zur Entfernung von Druckfarben aus bedrucktem Altpapier in Gegenwart einer Deinking-Chemikalie, wobei bedrucktes Altpapier zu einer Papierstoff-Suspension aufgeschlagen wird und die abgelösten Druckfarbenteilchen in einer weiteren Stufe in an sich bekannter Weise durch Flotation oder Auswaschen entfernt werden, **dadurch gekennzeichnet**, daß als Deinking-Chemikalie Alkoxylate geblasener Öle eingesetzt werden.

2. Verfahren nach Anspruch 1, dadurch gekennzeichnet, daß die Deinking-Chemikalie beim Aufschlagen und/oder vor der Flotation bzw. dem Auswaschen zugesetzt wird.

3. Verfahren nach Anspruch 1, dadurch gekennzeichnet, daß bedrucktes Altpapier in Gegenwart von 0,02 bis 2 Gew.-%, vorzugsweise von 0,1 bis 0,8 Gew.-%, von Alkoxylaten geblasener Öle - jeweils bezogen auf lufttrockenen Papierstoff - aufgeschlagen werden.

4. Verfahren nach Anspruch 1, dadurch gekennzeichnet, daß der Gewichtsanteil des Oxyalkylenteiles in den Alkoxylaten geblasener Öle 20 bis 95 %, vorzugsweise 50 bis 80 %, beträgt.

5. Verfahren nach Anspruch 1, dadurch gekennzeichnet, daß zum Aufschlagen des bedruckten Altpapiers Ethoxylate, Propoxylat und/oder Butoxylate, vorzugsweise Ethoxylate und/oder Propoxylate geblasener Öle eingesetzt werden.

6. Verwendung von Alkoxylaten geblasener Öle zur Entfernung von Druckfarben aus bedrucktem Altpapier.

7. Verwendung nach Anspruch 6, dadurch gekennzeichnet, daß der Gewichtsanteil des Oxyalkylenteiles in den Alkoxylaten geblasener Öle 20 bis 95 %, vorzugsweise 50 bis 80 %, beträgt.

8. Verwendung nach Anspruch 6, dadurch gekennzeichnet, daß Ethoxylate, Propoxylate und/oder Butoxylate, vorzugsweise Ethoxylate und/oder Propoxylate geblasener Öle verwendet werden.

9. Verwendung nach Anspruch 6, dadurch gekennzeichnet, daß die Alkoxylate geblasener Öle in Kombination mit Verbindungen eingesetzt werden, die ausgewählt sind aus der Gruppe der $C_{10-22}$-Fettsäuren, den Alkali- bzw. Erdalkalimetallsalzen dieser Fettsäuren oder kationischen Polymeren.

**Claims**

1. A process for removing printing inks from printed wastepaper in the presence of a deinking chemical, in which printed wastepaper is disintegrated to form a paper stock suspension and the detached printing ink particles are removed in known manner by flotation or washing in another stage, **characterized in that** alkoxylates of blown oils are used as the deinking chemical.

**2.** A process as claimed in claim 1, characterized in that the deinking chemical is added during disintegration and/or before the flotation or washing step.

**3.** A process as claimed in claim 1, characterized in that printed wastepaper is disintegrated in the presence of 0.02 to 2% by weight and preferably 0.1 to 0.8% by weight, based on air-dry paper stock, of alkoxylates of blown oils.

**4.** A process as claimed in claim 1, characterized in that the oxyalkylene component makes up from 20 to 95% by weight and preferably from 50 to 80% by weight of the alkoxylates of blown oils.

**5.** A process as claimed in claim 1, characterized in that ethoxylates, propoxylates and/or butoxylates, preferably ethoxylates and/or propoxylates of blown oils, are used for disintegrating the printed wastepaper.

**6.** The use of alkoxylates of blown oils for removing printing inks from printed wastepaper.

**7.** The use claimed in claim 6, characterized in that the oxyalkylene component makes up from 20 to 95% by weight and preferably from 50 to 80% by weight of the alkoxylates of blown oils.

**8.** The use claimed in claim 6, characterized in that ethoxylates, propoxylates and/or butoxylates, preferably ethoxylates and/or propoxylates, of blown oils are used.

**9.** The use claimed in claim 6, characterized in that the alkoxylates of blown oils are used in combination with compounds selected from the group consisting of $C_{10-22}$ fatty acids, alkali metal or alkaline earth metal salts thereof and cationic polymers.

**Revendications**

**1.** Procédé d'élimination des encres d'imprimerie des vieux papiers imprimés en présence de produits chimiques de désencrage, dans lequel les vieux papiers imprimés sont transformés en suspension de papier et dans lequel les particules d'encres d'imprimerie séparées sont éliminées de manière connue en soi par flottation ou lavage, au cours d'une opération ultérieure, caractérisé en ce que l'on utilise, comme produit chimique de désencrage, des alcoxylates d'huiles soufflées.

**2.** Procédé selon la revendication 1, caractérisé en ce que le produit chimique de désencrage est ajouté au moment du broyage et/ou de la flottation ou du lavage.

**3.** Procédé selon la revendication 1, caractérisé en ce que les vieux papiers imprimés sont broyés en présence de 0,02 à 2% en poids et, de préférence, de 0,1 à 0,8% en poids d'alcoxylates d'huiles soufflées - les pourcentages se rapportant chaque fois aux papiers séchés à l'air.

**4.** Procédé selon la revendication 1, caractérisé en ce que la fraction pondérale du composant oxyalkylène dans les alcoxylates d'huiles soufflées est comprise entre 20 et 95% et, de préférence, entre 50 et 80%.

**5.** Procédé selon la revendication 1, caractérisé en ce que l'on utilise, pour traiter les vieux papiers imprimés, des éthoxylates, des propoxylates et/ou des butoxylates et, de préférence, des éthoxylates et/ou des propoxylates d'huiles soufflées.

**6.** Utilisation des alcoxylates d'huiles soufflées pour éliminer les encres d'imprimerie des vieux papiers imprimés.

**7.** Utilisation selon la revendication 6, caractérisée en ce que la fraction pondérale de la fraction oxyalkylène dans les alcoxylates d'huiles soufflées est comprise entre 20 et 95% et, de préférence, entre 50 et 80%.

**8.** Utilisation selon la revendication 6, caractérisée en ce que l'on utilise des éthoxylates, des propoxylates et/ou des butoxylates et, de préférence, des éthoxylates et/ou les propoxylates d'huiles soufflées.

**EP 0 624 211 B1**

9. Utilisation selon la revendication 6, caractérisée en ce que les alcoxylates d'huiles soufflées sont utilisés en combinaison avec des composés qui sont choisis dans le groupe des acides gras en $C_{10-22}$, des sels alcalins ou alcalino-terreux de ces acides gras, ou de leurs polymères cationiques.

8